(19) Europäisches Patentamt
European Patent Office
Office européen des brevets

(11) **EP 2 249 186 B1**

(12) **FASCICULE DE BREVET EUROPEEN**

(45) Date de publication et mention
de la délivrance du brevet:
**22.08.2018 Bulletin 2018/34**

(51) Int Cl.:
***G01W 1/14*** *(2006.01)*     ***G01S 13/95*** *(2006.01)*

(21) Numéro de dépôt: **10159024.8**

(22) Date de dépôt: **01.04.2010**

(54) **Procédé d'évaluation de la taille des particules d'une précipitation météorologique**

Evaluierungsverfahren der Größe der Partikel eines meteorologischen Niederschlags

Method of evaluating particle sizes of meteorological precipitation

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **15.04.2009 FR 0901835**

(43) Date de publication de la demande:
**10.11.2010 Bulletin 2010/45**

(73) Titulaire: **METEO-FRANCE
75340 Paris Cédex 07 (FR)**

(72) Inventeur: **Berne, Alexis
1015, LAUSANNE (CH)**

(74) Mandataire: **Nony
11 rue Saint-Georges
75009 Paris (FR)**

(56) Documents cités:
• **HALL M P M ET AL: "Rain drop sizes and rainfall
rate measured by dual-polarization radar",
NATURE UK, vol. 285, no. 5762, 22 mai 1980
(1980-05-22), pages 195-198, XP002565939, ISSN:
0028-0836**
• **GODDARD J W F, CHERRY M, BRINGI V N:
"Comparison of Dual-Polarization Radar
Measurements of Rain with Ground-Based
Disdrometer Measurements", JOURNAL OF
APPLIED METEOROLOGY, vol. 21, no. 2, février
1982 (1982-02), pages 252-256, XP002565940,**
• **RINCON R F ET AL: "Microwave link
dual-wavelength measurements of path-average
attenuation for the estimation of drop size
distributions and rainfall", IEEE TRANSACTIONS
ON GEOSCIENCE AND REMOTE SENSING IEEE
USA, vol. 40, no. 4, avril 2002 (2002-04), pages
760-770, XP002565941, ISSN: 0196-2892**
• **BERNE A, SCHLEISS M: "Retrieval of the rain
drop size distribution using telecommunication
dual-polarization microwave links", 34TH
CONFERENCE ON RADAR METEOROLOGY, 5
octobre 2009 (2009-10-05), - 9 octobre 2009
(2009-10-09), XP002565942,**

**Description**

La présente invention concerne, de façon générale, l'acquisition et l'élaboration de données météorologiques.

Plus précisément, l'invention concerne un procédé d'évaluation d'au moins une caractéristique d'une précipitation météorologique, comprenant une opération consistant à émettre, en un point d'émission, une onde électromagnétique comprenant des première et deuxième composantes de polarisation orientées suivant deux directions orthogonales respectives dont l'une est plus proche de la verticale que l'autre, une opération consistant à recevoir en un point de réception l'onde électromagnétique ayant traversé ladite précipitation, et une opération consistant à évaluer ladite caractéristique en utilisant au moins une fonction d'une atténuation subie par l'une des deux composantes de l'onde électromagnétique entre les points d'émission et de réception sous l'effet de la précipitation.

Un procédé comprenant certaines au moins de ces opérations et décrit dans la demande de brevet WO 2007/007312 est par exemple utilisé pour déterminer le taux moyen de précipitation le long du trajet de l'onde électromagnétique. Un autre procédé est décrit dans M.P.M. Hall et al, "Rain drop sizes and rainfall rate measured by dual-polarization radar", Nature, Vol.285, pp.195-198. Bien que ce taux moyen de précipitation soit une donnée utile, la distribution de la taille des gouttes d'eau de pluie (ci-après dénommée "DSD") est une information plus fondamentale encore concernant les précipitations pluvieuses. Or, en l'absence de réseaux d'observation opérationnels appropriés, la variabilité dans le temps et dans l'espace de la DSD à l'échelle régionale reste mal répertoriée.

Dans ce contexte, la présente invention a pour but de proposer un procédé utilisant des mesures provenant d'une liaison microondes à polarisation double et permettant d'obtenir plus d'information sur une précipitation rencontrée sur son trajet par l'onde électromagnétique qui assure cette liaison.

A cette fin, le procédé de l'invention, par ailleurs conforme à la définition générique qu'en donne le préambule ci-dessus, est essentiellement caractérisé en ce que ladite caractéristique est liée à ou constituée par une distribution moyenne de tailles des particules le long du trajet de l'onde dans la précipitation, et en ce que cette caractéristique est évaluée en utilisant au moins une fonction du rapport de l'atténuation de la première composante de l'onde à l'atténuation de la deuxième composante de cette onde.

Pour ce faire, ladite distribution moyenne peut avantageusement être modélisée par une loi statistique à trois paramètres, telle qu'une loi gamma.

Par exemple, ladite distribution moyenne peut être définie par une concentration en nombre de particules par unité de volume, par un paramètre de forme et par un paramètre d'échelle.

De manière avantageuse, l'évaluation de ladite distribution moyenne utilise en outre une relation déterministe préétablie entre le paramètre de forme et le paramètre d'échelle.

Pour des climats typiques d'Europe de l'Ouest, ladite relation déterministe préétablie entre le paramètre de forme et le paramètre d'échelle suit par exemple, avec un écart relatif au plus égal à 25%, la loi : $\Lambda = 1.30 + 1.46\ \mu$, où $\Lambda$ et $\mu$ représentent respectivement des variables de paramètre d'échelle et de paramètre de forme.

Un premier des paramètres de forme et d'échelle peut ainsi être déterminé en exprimant, au moyen de ladite relation déterministe, le second de ces paramètres en fonction du premier paramètre dans ledit rapport de l'atténuation de la première composante de l'onde à l'atténuation de la deuxième composante de cette onde.

Le second desdits paramètres de forme et d'échelle peut alors être déterminé en remplaçant le premier de ces paramètres par sa valeur dans ladite relation déterministe.

Et ladite concentration peut quant à elle être déterminée en remplaçant les paramètres de forme et d'échelle par leurs valeurs respectives dans une expression représentant l'atténuation de l'une des composantes de l'onde électromagnétique.

Les composantes de polarisation de l'onde électromagnétique peuvent en particulier comprendre une composante verticale et une composante horizontale, et l'émission et la réception de l'onde électromagnétique peuvent être réalisées au moyen d'antennes constituant un faisceau hertzien de télécommunication.

D'autres caractéristiques et avantages de l'invention ressortiront clairement de la description qui en est faite ci-après, à titre indicatif et nullement limitatif, en référence aux dessins annexés, dans lesquels :

- La figure 1 est un diagramme représentant, en fonction du temps, les atténuations brutes des composantes de polarisation horizontale (en gris) et verticale (en noir) d'une onde électromagnétique traversant des zones de précipitation;

- La figure 2 est un diagramme représentant, en fonction du temps, diverses valeurs du rapport des atténuations des composantes de polarisation horizontale et verticale illustrées à la figure 1, ces valeurs étant utilisées pour déterminer la valeur du paramètre $\mu$e au moyen de l'Equation 7;

- Les figures 3A, 3B et 3C sont des diagrammes représentant, en fonction du temps, les valeurs des trois paramètres respectifs du modèle statistique décrivant la distribution des tailles des particules telle qu'énoncée dans l'Equation 5; et

- Les figures 4A, 4B et 4C sont des diagrammes représentent respectivement, en fonction du temps, des séries de valeurs d'intensité de pluie (R), de réflectivité radar en polarisation horizontale (Zh), et de réflectivité différentielle (Zdr), obtenues à partir des distributions de particules estimées conformément à l'invention (en gris), et comparées avec les mesures (en noir) d'un radar météorologique dédié.

Les références bibliographiques citées dans la présente description sont récapitulées à la fin de celle-ci.

Une liaison microondes se compose d'un émetteur en communication avec un récepteur par le biais d'un signal microondes, ou onde électromagnétique radio. L'utilisation de ces liaisons pour l'échange de données entre stations de base de réseaux de téléphonie mobile est très répandue. En raison des interactions entre les ondes électromagnétiques et les gouttes d'eau de pluie, le signal de la liaison est atténué lorsqu'une précipitation a lieu le long du trajet de la liaison. Dans la plage de fréquences généralement employée pour les liaisons de télécommunications à microondes (de 15 à 50 GHz environ), cette atténuation est liée de façon pratiquement linéaire au taux de précipitation [*par exemple,* Atlas and Ulbrich, 1977]. Le potentiel de cette particularité, pour l'estimation des précipitations pluvieuses, a été étudié pour des liaisons micro-ondes dédiées bi-fréquence [*par exemple, Rahimi et al., 2003*] ou à polarisation double [*par exemple, Ruf et al., 1996*]. Récemment, la possibilité d'utiliser des données provenant de liaisons de télécommunications opérationnelles a été mise en évidence [*Messer et al., 2006*]. Toutes ces études se concentrent sur l'estimation du taux des précipitations moyen le long du trajet.

La distribution de la taille des gouttes d'eau de pluie (notée DSD par la suite) décrit, de façon statistique, le nombre de gouttes d'un certain diamètre, par unité de volume de l'espace. Il s'agit d'une information fondamentale concernant les précipitations pluvieuses du fait que les variables principales relatives aux précipitations (par exemple, l'intensité de la précipitation, la teneur en eau liquide, la réflectivité radar) sont des moments statistiques pondérés de la DSD. A cause des effets combinés de la dynamique atmosphérique, de la microphysique des nuages, et de la sédimentation gravitationnelle, la DSD varie fortement dans l'espace et dans le temps sur une vaste étendue d'échelles [*par exemple, Uijlenhoet et al., 2003*]. Cette variabilité est une source d'incertitude pour l'estimation du taux des précipitations fondée sur l'utilisation d'un radar météorologique, parce que le facteur de réflectivité Z mesuré par un radar est converti en un taux des précipitations R en utilisant une loi de puissance dont les coefficients dépendent de la DSD. A ce jour, la variabilité de la DSD à l'échelle régionale n'est pas bien documentée en raison de l'absence de réseaux d'observation opérationnels appropriés.

L'intérêt des liaisons microondes est qu'elles permettent des mesures intégrées à l'échelle du trajet (quelques kilomètres), une échelle intermédiaire entre des mesures ponctuelles (d'un pluviomètre ou d'un capteur de gouttelettes disdromètre) et des mesures radar (le volume d'échantillonnage peut atteindre quelques $km^3$). En outre, le déploiement, pour les besoins en télécommunication, de réseaux de liaisons microondes pour couvrir de grandes zone représente une réelle valeur ajoutée. La présente demande décrit un procédé d'acquisition de la DSD moyenne le long du trajet en utilisant des liaisons commerciales à polarisation double. En fournissant, à la bonne échelle, de précieuses informations pour des comparaisons rigoureuses, de telles estimations de la DSD seront un facteur majeur pour l'amélioration de l'estimation des taux des précipitations par radar ainsi que pour la microphysique simulée dans des modèles météorologiques numériques.

La majeure partie des travaux consacrés à l'estimation de la précipitation pluvieuse utilisant des données de liaisons microondes a été centrée jusqu'à présent sur la recherche du taux des précipitations moyen le long du trajet de l'onde électromagnétique. Très peu d'études se sont penchées sur la question de l'acquisition de la DSD. *Holt et al.,* [2008] ont utilisé le rapport des atténuations à diverses fréquences afin de déduire une information de nature qualitative concernant la DSD. Quant à l'acquisition quantitative de la DSD, la seule approche, proposée par *Rincon et Lang* [2002], se fonde sur des liaisons dédiées bi-fréquence. Ce procédé consiste à utiliser l'atténuation totale mesuré à deux fréquences afin d'obtenir les valeurs de la DSD moyenne le long du trajet, décrite comme modèle à deux paramètres (une loi gamma avec un paramètre de forme fixe). La présente invention se distingue de cette étude antérieure par le fait qu'elle exploite la non-sphéricité des gouttes d'eau de pluie de plus d'un millimètre.

Lorsqu'une précipitation pluvieuse a lieu le long du trajet d'une onde électromagnétique, le signal de la liaison subit une atténuation A [dB] supplémentaire telle que :

$$A_i = \int_0^L k_i(s)\, ds \qquad (1)$$

où *i* représente la polarisation (horizontale ou verticale), où *L* est la longueur de la liaison, et où $k_i$ représente l'atténuation

[dB km$^{-1}$] unidirectionnelle spécifique à la fréquence et à la polarisation considérées de l'onde.

$$k_i(s) = \frac{1}{10\ln(10)} \int_{D_{min}}^{D_{max}} \sigma_{E,i}(D)N(D,s)\,dD \qquad (2)$$

où $D$ est le diamètre équivolumétrique des gouttes [mm] variant entre $D_{min}$ et $D_{max}$ ; où $\sigma_{E,i}$ *(D)* est la section efficace [cm$^2$] d'extinction à la fréquence et à la polarisation considérées, et où *N(D,s)dD* [m$^{-3}$] est le nombre de gouttes dont le diamètre est compris entre $D$ et $D + dD$, par mètre cube, à un emplacement *s.* En combinant l'Equation (1) et l'Equation (2), et en s'appuyant sur le théorème de Fubini pour le changement de l'ordre d'intégration, on déduit:

$$A_i = \frac{1}{10\ln(10)}L \int_{D_{min}}^{D_{max}} \sigma_{E,i}(D)\bar{N}(D)\,dD \qquad (3)$$

où $\bar{N}$ représente la DSD moyenne le long du trajet de la liaison, à savoir:

$$\bar{N}(D) = \frac{1}{L}\int_0^L N(D,s)\,ds \qquad (4)$$

On suppose que $\bar{N}$ est correctement décrite par une loi gamma [*Ulbrich,* 1983] :

$$\bar{N}(D) = \alpha_e N_{te} D^{\mu_e} e^{-\Lambda_e D} \qquad (5)$$

où $\alpha_e$ est un facteur de normalisation prenant en compte l'intervalle fini de diamètres possibles des gouttes entre $D_{min}$ et $D_{max}$, où $N_{te}$ [m$^{-3}$] représente la concentration des gouttes, où $\mu_e$ [-] est un paramètre de forme, et où $\Lambda_e$ [mm$^{-1}$] est un paramètre d'échelle. Il convient de noter que les paramètres moyens effectifs de la DSD, à savoir $N_{te}$, $\mu_e$, et $\Lambda_e$, ne sont pas égaux à la moyenne le long du trajet des valeurs ponctuelles de $N_t$, $\mu$ and $\Lambda$ en raison de la non-linéarité de l'Equation (5) .

La combinaison de l'Equation (5) et de l'Equation (3) conduit à:

$$A_i = \frac{1}{10\ln(10)}L\alpha_e\,N_{te} \int_{D_{min}}^{D_{max}} \sigma_{E,i}(D)D^{\mu_e} e^{-\Lambda_e D}\,dD \quad (6)$$

Une liaison à double polarité fournit des mesures de l'atténuation totale au niveau des polarisations horizontale et verticale. L'aplatissement des grosses gouttes de pluie fait que le rapport entre l'atténuation (en dB) sur la polarisation verticale et horizontale est inférieur ou égal à 1 et se traduit comme suit:

$$\frac{A_v}{A_h} = \frac{\int_{D_{min}}^{D_{max}} \sigma_{E,v}(D) D^{\mu_e} e^{-\Lambda_e D} \, dD}{\int_{D_{min}}^{D_{max}} \sigma_{E,h}(D) D^{\mu_e} e^{-\Lambda_e D} \, dD} \qquad (7)$$

En supposant une relation entre l'aplatissement d'une gouttelette et son diamètre équivolumétrique [*par exemple, Andsager et al., 1999*] et en utilisant le code en matrice T (ou "T-matrix code") [*Mishchenko et Travis, 1998*], on peut calculer $\sigma_{E,h}$ et $\sigma_{E,v}$ (à une fréquence et à une température données). En outre, certaines études [*par exemple, Zhang et al., 2001*] suggèrent une relation déterministe entre les paramètres de forme et d'échelle. En partant de l'hypothèse $\Lambda_e = f(\mu_e)$, $\mu_e$ reste le seul paramètre indépendant dans l'Equation (7) et il est donc possible d'en fournir une estimation numérique. Dès l'obtention de la valeur de $\mu_e$, $\Lambda_e$ est calculé directement par $f(\mu_e)$ et, en utilisant l'Equation (6), $N_{te}$ est définitivement déduit pour l'une ou l'autre des polarisations. Ceci définit le procédé proposé pour l'acquisition de la DSD en utilisant des liaisons microondes à polarisation double de télécommunications.

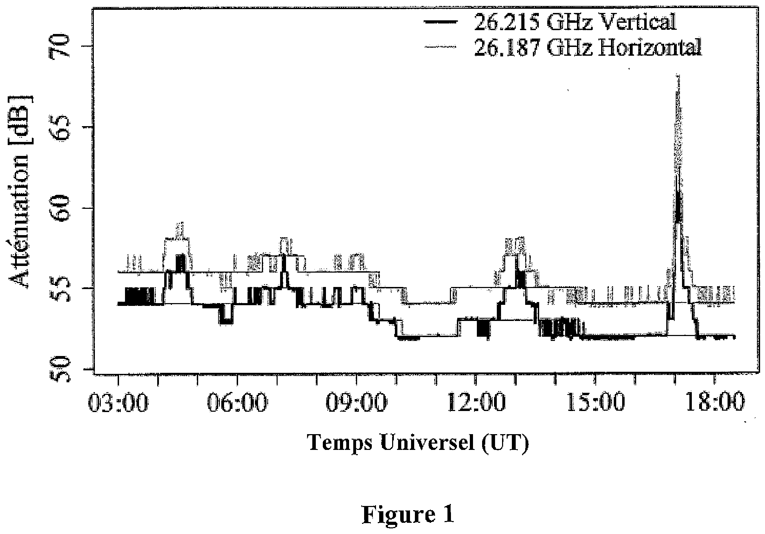

Pour tester de façon confidentielle le procédé proposé, une grande société française de télécommunications a fourni des mesures instantanées de la puissance émise et reçue (toutes les 30 s avec une résolution de puissance de 1 dB) d'une liaison microondes à double polarisation située à proximité de la ville de Paris. Cette liaison a une longueur de 2,4 km et émet à des fréquences d'environ 26 GHz. Les précipitations pluvieuses qui ont eu lieu le 22 août 2008 ont été choisies pour illustrer le procédé de l'invention. La figure 1 présente les valeurs d'atténuation brutes correspondantes mesurées. Il est possible, sur cette figure d'identifier les pics d'atténuation significatifs, et d'observer clairement l'incertitude, relativement importante, au niveau des mesures de puissance (environ 1 dB) indiquant le bruit pendant les périodes sèches (par exemple entre 3h00 et 4h00 du temps universel).

Comme le montre l'exemple de la figure 1, qui utilise une composante de polarisation verticale à 26,215 GHz et une composante de polarisation horizontale à 26,187 GHz, les composantes de l'onde électromagnétique utilisée pour la mise en oeuvre de l'invention ne sont pas astreintes à présenter exactement la même fréquence, mais peuvent indifféremment présenter des fréquences identiques ou différentes.

Comme dans le cas de l'estimation du taux des précipitations à partir de liaisons microondes [*Rahimi et al., 2003*], il est également souhaitable, dans le procédé de l'invention, d'isoler l'atténuation causée uniquement par la précipitation pluvieuse, de l'atténuation provenant d'autres sources (pertes au niveau de l'émission/réception, atténuation induite par les gaz atmosphériques, diffusion multiple). L'atténuation qui se produit pendant les périodes sèches est appelée ligne de base de l'atténuation.

La variabilité de la ligne de base de l'atténuation pendant les périodes sèches découle de changements de température et d'humidité (influant sur la propagation du faisceau et les pertes pendant l'émission/réception) ou de la diffusion multiple [*Leijnse et al., 2007*]. Afin de tenir compte de cette variabilité, il est donc souhaitable d'estimer une ligne de base d'atténuation "locale". Une technique fondée sur les différences de la dispersion des mesures de l'atténuation pendant les périodes sèches et pluvieuses peut par exemple être utilisée (1) afin d'identifier les périodes sèches et pluvieuses, et (2) afin d'estimer la ligne de base de l'atténuation à chaque palier temporel. Une telle technique ne requiert d'ailleurs pas de mesures à polarisation double et peut également être appliquée aux liaisons microondes mono-fréquence, mono-polarisation.

Par ailleurs, le film d'eau liquide qui se forme à la surface des antennes lorsque celles-ci sont exposées à la pluie, peut atténuer, de manière significative, le signal de la liaison. Il est donc également souhaitable de tenir compte de cette atténuation dans les mesures brutes pour éviter la surestimation de l'atténuation induite uniquement par la pluie le long du trajet de la liaison. *Kharadly et Ross* [2001] ont proposé la modélisation de l'atténuation pour humidité d'antennes, $A_{wa}$, comme une fonction exponentielle de l'atténuation mesurée $A_m$.

$$A_{wa} = c_1 \left[ 1 - e^{-c_2 A_m} \right] \qquad (8)$$

où $c_1$ et $c_2$ sont deux paramètres du modèle. Les valeurs utilisées dans le cas présenté sont $c_1$ = 3,3 dB [*Leijnse et al., 2007*] et $c_2$ = 0,125 [*Minda et Nakamura, 2005*]. Les valeurs calculées par le biais de ce modèle correspondent à l'atténuation causée, à la fois, par l'antenne d'émission et par l'antenne de réception de la liaison.

Les mesures obtenues n'ont pas pu inclure d'observations directes de la DSD le long ou à proximité de la liaison considérée. Cependant, des variables intégrées, telles que le taux moyen $\bar{R}$ des précipitations le long du trajet, la réflectivité horizontale $\bar{Z}_h$ et la réflectivité différentielle $\bar{Z}_{dr}$, peuvent être déduites des DSD moyennes le long du trajet. Pour une évaluation indirecte des DSD obtenues, ces valeurs seront comparées à des estimations indépendantes provenant d'un radar polarimétrique en bande C opérationnel situé à Trappes, à environ 30 Km de la liaison. La Demanderesse a fourni des mesures polaires de $Z_h$ et $Z_{dr}$, avec des résolutions radiale et angulaire de 240 mètres et 0,5 degré, respectivement, ainsi que des estimations de R obtenues par radar, avec une résolution spatiale de 1 km$^2$, toutes les 5 minutes. Les valeurs du taux des précipitations sont calculées suivant la méthodologie décrite dans *Tabary* [2007]. Les valeurs moyennes le long du trajet sont calculées en partant de ces données prises comme la moyenne des pixels radar traversés par la liaison, que l'on pondère par la longueur du trajet de la liaison à chaque pixel.

Dans l'exemple ci-dessous de mise en oeuvre du procédé proposé, la relation déterministe entre $\Lambda$ et $\mu$ prend la forme de la relation linéaire suivante:

$$\Lambda = 1.30 + 1.46\mu \qquad (9)$$

Cette loi s'adapte très bien (avec un coefficient de corrélation de 0,94) à un grand nombre de mesures de la DSD (4183 spectres DSD) collectées entre les mois de mai et octobre 2008 à Lausanne, en Suisse. Bien que dérivée de mesures ponctuelles, et s'agissant d'une relation climatologique, cette relation est censée être représentative de DSD dont la moyenne est établie sur quelques kilomètres. La similarité des climats à Paris et à Lausanne autorise en outre à penser que cette relation climatologique peut être valablement utilisée pour l'acquisition de la DSD à Paris.

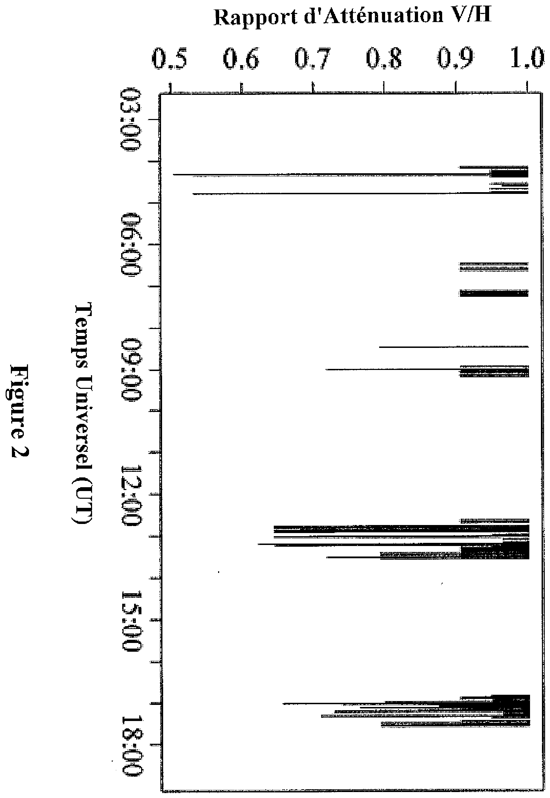

Une fois obtenue, à partir des mesures brutes, l'atténuation due uniquement à la précipitation pluvieuse, il est possible de calculer le rapport entre les valeurs d'atténuation au niveau des polarisations verticale et horizontale (voir la figure 2). La discrétisation des valeurs pour des rapports proches de 1 est due à un arrondi, à 1 dB, des atténuations mesurées. Par ailleurs, cet arrondi peut conduire à des valeurs de rapports soit trop élevées (au dessus de 1), soit trop basses (en dessous de 0.7, la valeur minimale du rapport, estimée en utilisant une plage plausible de valeurs de $\mu$ comme entrée dans l'Equation 7). Dans les analyses ultérieures, ces valeurs sont éliminées.

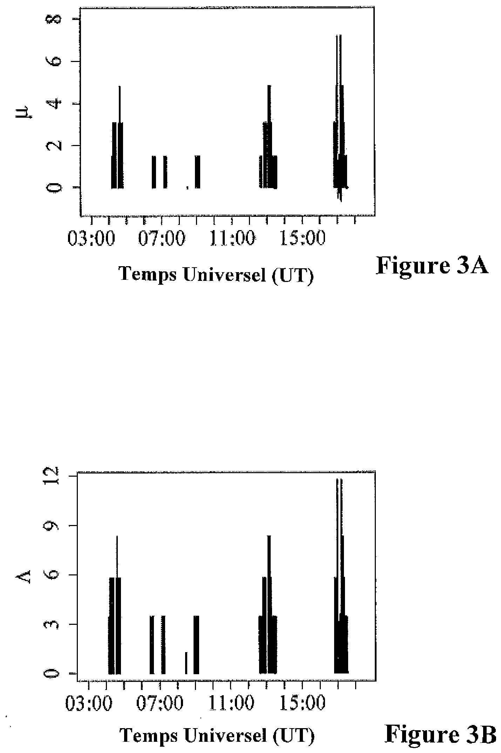

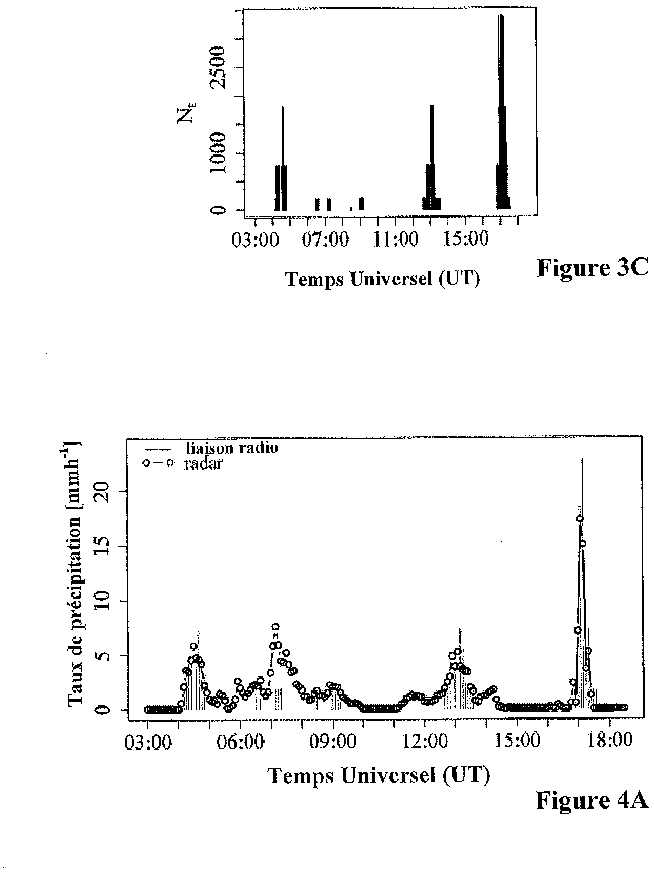

En utilisant les valeurs calculées de sections efficaces de l'extinction pour les deux polarisations, l'Equation (7) peut être inversée numériquement afin d'estimer la valeur de $\mu_e$. Dans le cadre de la précipitation pluvieuse étudiée, il n'y a qu'une seule solution pour $\mu_e$ dans la plage sélectionnée de valeurs physiques possibles (entre -1 et 30). La valeur correspondante de $\Lambda_e$ est ensuite obtenue en utilisant l'Equation (9). Enfin, la valeur de $N_{te}$ est calculée en utilisant l'Equation (6) pour la polarisation horizontale pour laquelle l'atténuation est plus importante, ce qui minimise l'effet de l'incertitude des mesures. De cette manière, la DSD moyenne le long du trajet, notée $\bar{N}$, peut être obtenue à partir de mesures sur la liaison microondes à polarisation double. La figure 3 montre les plages des valeurs obtenues pour $\mu_e$, $\Lambda_e$ et $N_{te}$.

Afin d'évaluer (indirectement) la qualité des DSD obtenues, les variables pluviométriques moyennes le long du trajet correspondantes sont calculées en utilisant les équations suivantes:

$$\bar{R} = 6\pi 10^4 \int_{D_{min}}^{D_{max}} v(D)D^3 \bar{N}(D)\, dD \qquad (10)$$

$$\bar{Z}_{h|v} = \frac{10^4 \lambda^4}{\pi^5 |K|^2} \int_{D_{min}}^{D_{max}} \sigma_{Bh|v}(D)\bar{N}(D)\, dD \qquad (11)$$

où $v(D)$ représente la vitesse de chute terminale [m s$^{-1}$] d'une goutte d'un diamètre équivolumétrique $D$, calculée en utilisant le modèle de Beard [*Beard, 1976*], où $K$ est le facteur diélectrique, lié à la permittivité relative de l'eau liquide, où $\lambda$ est la longueur d'onde [cm] de l'onde, et où $\sigma_{B,h|v}$ représente la section efficace [cm$^2$] de rétrodiffusion dans la polarisation horizontale (verticale). $\bar{R}$ est exprimé en mm h$^{-1}$ et $Z_h|_v$ en mm$^6$ m$^{-3}$. La réflectivité différentielle moyenne $\bar{Z}_{dr}$ le long du trajet est calculée par $\bar{Z}_{dB,h}$ - $\bar{Z}_{dB,v}$ et s'exprime en dB.

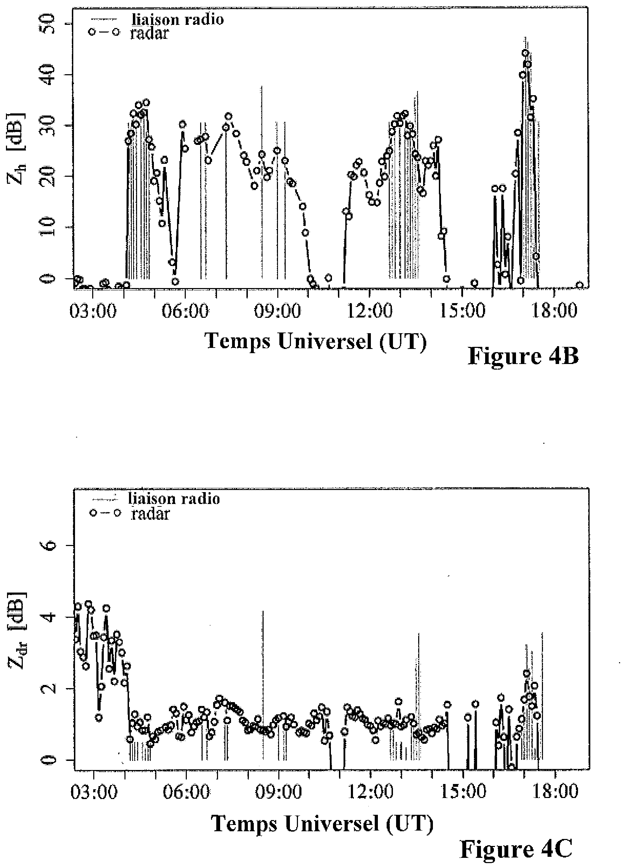

La moyenne de ces trois variables est établie sur une résolution temporelle de 5 min puis comparée aux observations radar (voir la Figure 4). Pour la comparaison avec les valeurs de $Z_h$ et $Z_{dr}$ tirées des DSD obtenues, les valeurs de $Z_h$ et $Z_{dr}$ utilisées sont celles qui proviennent du balayage radar à la plus basse altitude, de manière à limiter la différence d'altitude avec les mesures sur les liaisons. Les valeurs des taux des précipitations sont déduites en combinant des balayages à diverses élévations. Compte tenu du fait que les données concernant l'élévation la plus basse présentent quelques trous, il y a moins de valeurs pour l'évaluation de $Z_h$ et $Z_{dr}$, estimées à partir des DSD obtenues, que pour $\overline{R}$. La concordance est excellente pour le taux des précipitations: le coefficient de corrélation est de 0,86 et le rapport des moyennes de 0,91. La concordance est bonne pour $Z_h$ et $Z_{dr}$, à l'exception de 3 valeurs (aux environs de 8h30 et 13h30). Ces valeurs sont dues à l'arrondi de 1 dB des mesures sur les liaisons, ce qui peut conduire à des rapports d'atténuation artificiellement bas, mais néanmoins plausibles. Pour faire correspondre ces rapports sous-estimés, les valeurs dérivées de $\mu_e$ et $\Lambda_e$ se rapportent donc à des DSD incluant un nombre trop important de grosses gouttes aplaties. Les valeurs obtenues de $N_t$ doivent être ajustées de sorte que l'atténuation horizontale soit correcte, et sont donc sous-estimées afin de compenser le nombre surestimé de grosses gouttes. Ceci a un impact plus important sur $\overline{Z}_h$ et $\overline{Z}_{dr}$ que sur $\overline{R}$ parce qu'ils correspondent à des moments d'ordre supérieur de la DSD. Si les trois valeurs suspectes ne sont pas prises en compte, le coefficient de corrélation devient 0,58 (respectivement 0,59) et le rapport des moyennes 0,91 (respectivement 1,24) pour $\overline{Z}_h$ (respectivement $\overline{Z}_{dr}$). A noter que la plupart des valeurs de $\overline{Z}_{dr}$ sont relativement faibles (en dessous de 1,5 dB) avec une incertitude de l'ordre de 0,5 dB, c'est-à-dire de 30%. De bonnes concordances ont également été obtenues pour deux autres précipitations pluvieuses et démontrent la robustesse du procédé proposé. Par ailleurs, le fait que les valeurs de $\overline{R}$, $\overline{Z}_h$ et $\overline{Z}_{dr}$ obtenues soient cohérentes avec des estimations indépendantes montre la faisabilité et la pertinence du procédé proposé d'estimation de la DSD sur la base de mesures provenant de liaisons de télécommunications qui, à l'origine, ne sont pas spécifiquement conçues pour cet usage.

En conclusion, la distribution de la taille des gouttes de pluie est une information cruciale pour l'interprétation de mesures radar en matière d'intensité des précipitations pluvieuses, ainsi que pour la validation de la microphysique simulée dans les modèles météorologiques numériques. Le procédé précédemment décrit, et dont la faisabilité est démontrée, utilise des mesures provenant de liaisons microondes de télécommunications à polarisation double pour l'estimation de DSD moyennes le long du trajet. Dans son mode de réalisation préféré, ce procédé permet l'acquisition des trois paramètres d'un modèle de la DSD selon une loi gamma, en supposant une relation déterministe entre les paramètres de forme et d'échelle. Tout d'abord, l'atténuation due à la précipitation pluvieuse est de préférence extraite de mesures d'atténuation brutes. Le paramètre de forme est obtenu du rapport des atténuations subies par les composantes de polarisations verticale et horizontale. Puis le paramètre d'échelle est calculé directement en partant de sa relation avec le paramètre de forme. Enfin, la concentration des gouttes est déduite en utilisant l'atténuation au niveau de la polarisation horizontale.

Ce procédé d'acquisition de la DSD a été appliqué à un ensemble de données provenant d'une liaison opérationnelle microondes à double polarité, consistant en des mesures instantanées d'atténuation sur le trajet collectées toutes les 30 s avec une résolution de 1 dB. La qualité des DSD obtenues est évaluée en comparant le taux des précipitations, la réflectivité au niveau de la polarisation horizontale et les valeurs de réflectivité différentielle déduites des DSD obtenues avec des mesures provenant d'un radar météorologique polarimétrique en bande C opérationnel proche. La bonne concordance entre ces estimations indépendantes démontre la faisabilité de l'acquisition de la DSD moyenne le long du trajet utilisant une liaison microondes à polarisation double.

## References

Andsager, K., K. V. Beard, and N. F. Laird (1999), Laboratory measurements of axis ratios for large rain drops, J. Atmos. Sci., 56(15), 2673-2683.

Atlas, D., and C. W. Ulbrich (1977), Path and area integrated rainfall measurement by microwave attenuation in the 1-3 cm band, J. Appl. Meteor., 16(4),327-332.

Beard, K. V. (1976), Terminal velocity and shape of cloud and précipitation drops aloft, J. Atmos. Sci., 33(5), 851-864.

Holt, A. R., R. J. Cummings, G. J. G. Upton, and W. J. Bradford (2008), Rain rates, drop size information, and precipitation type, obtained from one-way differential propagation phase and attenuation along a microwave link, Radio Sci., 43, RS5009, doi:10.1029/2007RS003773.

Kharadly, M. M. Z., and R. Ross (2001), Effect of wet antenna attenuation on propagation data statistics, IEEE T.

Antenn. Propag., 49(8), 1183-1191.

Leijnse, H., R. Uijlenhoet, and J. N. M. Stricker (2007), Hydrometeorological application of a microwave link. Part II: precipitation, Water Resour. Res., 43(4), WO4,417, doi: 10.1029/2006WR004989.

Messer, H., A. Zinevich, and P. Alpert (2006), Environmental monitoring by wireless communication networks, Science, 312, 713, doi:10.1126/science.1120034.

Minda, H., and K. Nakamura (2005), High resolution path-average rain gauge with 50-GHz Band microwave, J. Atmos. Oceanic Technol., 22(2), 165-179, doi:10.1175/JTECH-1683.1.

Mishchenko, M. I., and L. D. Travis (1998), Capabilities and limitations of a current FORTRAN implementation of the T-matrix method for randomly oriented, rotationally symmetric scatterers, J. Quant. Spectrosc. Radiat. Transfer, 60(3), 309-324.

Rahimi, A. R., G. J. G. Upton, A. R. Holt, and R. J. Cummings (2003), Use of dual-frequency microwave links for measuring path-averaged rainfall, J. Geophys. Res., 108(D15), 4467, doi: 10.1029/2002JD003202.

Rincon, R. S., and R. H. Lang (2002), Microwave link dual-wavelength measurements of path-average attenuation for the estimation of drop size distribution and rainfall, IEEE T. Geosci. Remote Sens., 40(4), 760-770.

Ruf, C. S., K. Aydin, S. Mathur, and J. P. Bobak (1996), 35-GHz dual-polarization propagation link for rain-rate estimation, J. Atmos. Oceanic Technol., 13(2), 409-425.

Tabary, P. (2007), The new French operational radar rainfall product. Part I: methodology, Weather Forecast., 22(3), 393-408, doi:10.1175/WAF1004.1.

Uijlenhoet, R., M. Steiner, and J. A. Smith (2003), Variability of raindrop size distributions in a squall line and implications for radar rainfall estimation, J. Hydrometeor., 44(4), 43-61.

Ulbrich, C. W. (1983), Natural variations in the analytical form of the raindrop-size distribution, J. Climate Appl. Meteor., 22(10),1764-1775.

Zhang, G., J. Vivekanandan, and E. Brandes (2001), A method for estimating rain rate and drop size distribution from polarimetric radar measurements, IEEE T. Geosci. Remote Sens., 39 (4), 830-841.

## Revendications

1. Procédé d'évaluation d'au moins une caractéristique d'une précipitation météorologique, comprenant une opération consistant à émettre, en un point d'émission, une onde électromagnétique comprenant des première et deuxième composantes de polarisation orientées suivant deux directions orthogonales respectives dont l'une est plus proche de la verticale que l'autre, une opération consistant à recevoir en un point de réception l'onde électromagnétique ayant traversé ladite précipitation, et une opération consistant à évaluer ladite caractéristique en utilisant au moins une fonction d'une atténuation subie par l'une des deux composantes de l'onde électromagnétique entre les points d'émission et de réception sous l'effet de la précipitation, **caractérisé en ce que** ladite caractéristique est liée à ou constituée par une distribution moyenne ($\overline{N}$) de tailles des particules le long du trajet de l'onde dans la précipitation, et **en ce que** cette caractéristique est évaluée en utilisant au moins une fonction du rapport (Av / Ah) de l'atténuation de la première composante de l'onde à l'atténuation de la deuxième composante de cette onde.

2. Procédé d'évaluation suivant la revendication 1, **caractérisé en ce que** ladite distribution moyenne ($\overline{N}$) est modélisée par une loi statistique à trois paramètres, telle qu'une loi gamma.

3. Procédé d'évaluation suivant la revendication 2, **caractérisé en ce que** ladite distribution moyenne ($\overline{N}$) est définie par une concentration ($N_{te}$) en nombre de particules par unité de volume, par un paramètre de forme ($\mu_e$) et par un paramètre d'échelle ($\Lambda_e$).

4. Procédé d'évaluation suivant la revendication 3, **caractérisé en ce que** ladite caractéristique est évaluée en utilisant en outre une relation déterministe préétablie entre le paramètre de forme et le paramètre d'échelle.

5. Procédé d'évaluation suivant la revendication 4, **caractérisé en ce que** ladite relation déterministe préétablie entre le paramètre de forme et le paramètre d'échelle suit, avec un écart relatif au plus égal à 25%, la loi : $\Lambda = 1.30 + 1.46\ \mu$, où $\Lambda$ et $\mu$ représentent respectivement des variables de paramètre d'échelle et de paramètre de forme.

6. Procédé d'évaluation suivant l'une quelconque des revendications 4 et 5, **caractérisé en ce qu'**un premier des paramètres de forme et d'échelle est déterminé en exprimant, au moyen de ladite relation déterministe, le second de ces paramètres en fonction du premier paramètre dans ledit rapport (Av / Ah) de l'atténuation de la première composante de l'onde à l'atténuation de la deuxième composante de cette onde.

7. Procédé d'évaluation suivant la revendication 6, **caractérisé en ce que** le second desdits paramètres de forme et d'échelle est déterminé en remplaçant le premier de ces paramètres par sa valeur dans ladite relation déterministe.

8. Procédé d'évaluation suivant la revendication 7, **caractérisé en ce que** ladite concentration (Nte) est déterminée en remplaçant les paramètres de forme et d'échelle par leurs valeurs respectives dans une expression représentant l'atténuation de l'une des composantes de l'onde électromagnétique.

9. Procédé d'évaluation suivant l'une quelconque des revendications précédentes, **caractérisé en ce que** les composantes de polarisation de l'onde électromagnétique comprennent une composante verticale et une composante horizontale.

10. Procédé d'évaluation suivant l'une quelconque des revendications précédentes, **caractérisé en ce que** l'émission et la réception de l'onde électromagnétique sont réalisées au moyen d'antennes constituant un faisceau hertzien de télécommunication.


**Patentansprüche**

1. Verfahren zur Evaluierung mindestens eines Merkmals eines meteorologischen Niederschlags, umfassend einen Vorgang, der darin besteht, an einem Sendepunkt eine elektromagnetische Welle zu senden, die eine erste und eine zweite Polarisierungskomponente enthält, die gemäß zwei jeweiligen orthogonalen Richtungen orientiert sind, von denen eine näher an der Vertikalen als die andere ist, einen Vorgang, der darin besteht, an einem Empfangspunkt die elektromagnetische Welle zu empfangen, die den Niederschlag durchquert hat, und einen Vorgang, der darin besteht, das Merkmal mithilfe mindestens einer Funktion einer Dämpfung, die eine der zwei Komponenten der elektromagnetischen Welle zwischen dem Sendepunkt und dem Empfangspunkt unter der Wirkung des Niederschlags erfahren hat, zu evaluieren, **dadurch gekennzeichnet, dass** das Merkmal mit einer mittleren Verteilung ($\overline{N}$) von Teilchengrößen entlang des Wegs der Welle in dem Niederschlag in Verbindung steht oder davon gebildet wird, und dadurch, dass dieses Merkmal mithilfe mindestens einer Funktion des Verhältnisses (Av / Ah) der Dämpfung der ersten Komponente der Welle zur Dämpfung der zweiten Komponente dieser Welle evaluiert wird.

2. Verfahren zur Evaluierung nach Anspruch 1,
**dadurch gekennzeichnet, dass** die mittlere Verteilung ($\overline{N}$) durch ein statistisches Gesetz mit drei Parametern, wie beispielsweise ein Gamma-Gesetz, modelliert wird.

3. Verfahren zur Evaluierung nach Anspruch 2, **dadurch gekennzeichnet, dass** die mittlere Verteilung ($\overline{N}$) durch eine Konzentration (Nte) der Teilchenzahl pro Volumeneinheit, einen Formparameter ($\mu$e) und einen Maßstabparameter ($\Delta$e) definiert wird.

4. Verfahren zur Evaluierung nach Anspruch 3, **dadurch gekennzeichnet, dass** das Merkmal ferner mithilfe eines vorgegebenen deterministischen Verhältnisses zwischen dem Formparameter und dem Maßstabparameter evaluiert wird.

5. Verfahren zur Evaluierung nach Anspruch 4, **dadurch gekennzeichnet, dass** das vorgegebene deterministische Verhältnis zwischen dem Formparameter und dem Maßstabparameter mit einer relativen Abweichung von höchstens 25% dem Gesetz $\Delta = 1{,}30 + 1{,}46\ \mu$. folgt, wobei $\Delta$ und $\mu$ jeweils Maßstabparameter- und Formparameter-Variablen darstellen.

**6.** Verfahren zur Evaluierung nach einem der Ansprüche 4 und 5, **dadurch gekennzeichnet, dass** ein erster der Form- und Maßstabparameter bestimmt wird, indem mittels des deterministischen Verhältnisses der zweite dieser Parameter in Abhängigkeit von dem ersten Parameter in dem Verhältnis (Av / Ah) der Dämpfung der ersten Komponente der Welle zur Dämpfung der zweiten Komponente dieser Welle ausgedrückt wird.

**7.** Verfahren zur Evaluierung nach Anspruch 6, **dadurch gekennzeichnet, dass** der zweite der Form- und Maßstabparameter bestimmt wird, indem der erste dieser Parameter durch seinen Wert in dem deterministischen Verhältnis ersetzt wird.

**8.** Verfahren zur Evaluierung nach Anspruch 7, **dadurch gekennzeichnet, dass** die Konzentration (Nte) bestimmt wird, indem die Form- und Maßstabparameter durch ihre jeweiligen Werte in einem Ausdruck ersetzt werden, der die Dämpfung einer der Komponenten der elektromagnetischen Welle darstellt.

**9.** Verfahren zur Evaluierung nach einem der vorhergehenden Ansprüche, **dadurch gekennzeichnet, dass** die Polarisierungskomponenten der elektromagnetischen Welle eine vertikale Komponente und eine horizontale Komponente umfassen.

**10.** Verfahren zur Evaluierung nach einem der vorhergehenden Ansprüche, **dadurch gekennzeichnet, dass** die Sendung und der Empfang der elektromagnetischen Welle mittels Antennen erfolgen, die eine Telekommunikations-Richtfunkverbindung bilden.

**Claims**

**1.** Method for evaluating at least one characteristic of a meteorological precipitation, comprising an operation consisting in emitting, at an emission point, an electromagnetic wave comprising first and second polarization components that are oriented in two respective orthogonal directions one of which is closer to the vertical than the other, an operation consisting in receiving, at a reception point, the electromagnetic wave after it has passed through said precipitation, and an operation consisting in evaluating said characteristic using at least one function of an attenuation undergone by one of the two components of the electromagnetic wave between the emission and reception points under the effect of the precipitation, **characterized in that** said characteristic is related to or consists of an average size distribution ($\overline{N}$) of the particles along the path of the wave in the precipitation, and **in that** this characteristic is evaluated using at least one function of the ratio (Av / Ah) of the attenuation of the first component of the wave to the attenuation of the second component of this wave.

**2.** Evaluating method according to Claim 1, **characterized in that** said average distribution ($\overline{N}$) is modelled using a three-parameter statistical distribution such as a gamma distribution.

**3.** Evaluating method according to Claim 2, **characterized in that** said average distribution ($\overline{N}$) is defined by a concentration (Nte) in number of particles per unit volume, by a shape parameter ($\mu e$) and by a scale parameter ($\Lambda e$).

**4.** Evaluating method according to Claim 3, **characterized in that** said characteristic is evaluated furthermore using a pre-established deterministic relationship between the shape parameter and the scale parameter.

**5.** Evaluating method according to Claim 4, **characterized in that** said pre-established deterministic relationship between the shape parameter and the scale parameter follows, with a relative deviation at most equal to 25%, the law: $\Lambda = 1.30 + 1.46\mu$, where $\Lambda$ and $\mu$ are scale-parameter and shape-parameter variables, respectively.

**6.** Evaluating method according to either one of Claims 4 and 5, **characterized in that** a first of the shape and scale parameters is determined by expressing, by means of said deterministic relationship, the second of these parameters as a function of the first parameter in said ratio (Av / Ah) of the attenuation of the first component of the wave to the attenuation of the second component of this wave.

**7.** Evaluating method according to Claim 6, **characterized in that** the second of said shape and scale parameters is determined by replacing the first of these parameters with its value in said deterministic relationship.

**8.** Evaluating method according to Claim 7, **characterized in that** said concentration (Nte) is determined by replacing the shape and scale parameters with their respective values in an expression representing the attenuation of one of the components of the electromagnetic wave.

9. Evaluating method according to any one of the preceding claims, **characterized in that** the polarization components of the electromagnetic wave comprise a vertical component and a horizontal component.

10. Evaluating method according to any one of the preceding claims, **characterized in that** the emission and reception of the electromagnetic wave are carried out by means of antennas forming a telecommunications radio-link system.

Figure 1

Figure 2

Figure 3A

Figure 3B

**Figure 3C**

**Figure 4A**

**Figure 4B**

**Figure 4C**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007007312 A


**Littérature non-brevet citée dans la description**

- **M.P.M. HALL et al.** Rain drop sizes and rainfall rate measured by dual-polarization radar. *Nature,* vol. 285, 195-198
- Atlas and Ulbrich. 1977
- **ANDSAGER, K. ; K. V. BEARD ; N. F. LAIRD.** Laboratory measurements of axis ratios for large rain drops. *J. Atmos. Sci.,* 1999, vol. 56 (15), 2673-2683
- **ATLAS, D. ; C. W. ULBRICH.** Path and area integrated rainfall measurement by microwave attenuation in the 1-3 cm band. *J. Appl. Meteor.,* 1977, vol. 16 (4), 327-332
- **BEARD, K. V.** Terminal velocity and shape of cloud and précipitation drops aloft. *J. Atmos. Sci.,* 1976, vol. 33 (5), 851-864
- **HOLT, A. R. ; R. J. CUMMINGS ; G. J. G. UPTON ; W. J. BRADFORD.** Rain rates, drop size information, and precipitation type, obtained from one-way differential propagation phase and attenuation along a microwave link. *Radio Sci.,* 2008, vol. 43, RS5009
- **KHARADLY, M. M. Z. ; R. ROSS.** Effect of wet antenna attenuation on propagation data statistics. *IEEE T. Antenn. Propag.,* 2001, vol. 49 (8), 1183-1191
- **LEIJNSE, H. ; R. UIJLENHOET ; J. N. M. STRICKER.** Hydrometeorological application of a microwave link. Part II: precipitation. *Water Resour. Res.,* 2007, vol. 43 (4), 417
- **MESSER, H. ; A. ZINEVICH ; P. ALPERT.** Environmental monitoring by wireless communication networks. *Science,* 2006
- **MINDA, H. ; K. NAKAMURA.** High resolution path-average rain gauge with 50-GHz Band microwave. *J. Atmos. Oceanic Technol.,* 2005, vol. 22 (2), 165-179
- **MISHCHENKO, M. I. ; L. D. TRAVIS.** Capabilities and limitations of a current FORTRAN implementation of the T-matrix method for randomly oriented, rotationally symmetric scatterers. *J. Quant. Spectrosc. Radiat. Transfer,* 1998, vol. 60 (3), 309-324
- **RAHIMI, A. R. ; G. J. G. UPTON ; A. R. HOLT ; R. J. CUMMINGS.** Use of dual-frequency microwave links for measuring path-averaged rainfall. *J. Geophys. Res.,* 2003, vol. 108 (D15), 4467
- **RINCON, R. S. ; R. H. LANG.** Microwave link dual-wavelength measurements of path-average attenuation for the estimation of drop size distribution and rainfall. *IEEE T. Geosci. Remote Sens.,* 2002, vol. 40 (4), 760-770
- **RUF, C. S. ; K. AYDIN ; S. MATHUR ; J. P. BOBAK.** 35-GHz dual-polarization propagation link for rain-rate estimation. *J. Atmos. Oceanic Technol.,* 1996, vol. 13 (2), 409-425
- **TABARY, P.** The new French operational radar rainfall product. Part I: methodology. *Weather Forecast.,* 2007, vol. 22 (3), 393-408
- **UIJLENHOET, R. ; M. STEINER ; J. A. SMITH.** Variability of raindrop size distributions in a squall line and implications for radar rainfall estimation. *J. Hydrometeor.,* 2003, vol. 44 (4), 43-61
- **ULBRICH, C. W.** Natural variations in the analytical form of the raindrop-size distribution. *J. Climate Appl. Meteor.,* 1983, vol. 22 (10), 1764-1775
- **ZHANG, G. ; J. VIVEKANANDAN ; E. BRANDES.** A method for estimating rain rate and drop size distribution from polarimetric radar measurements. *IEEE T. Geosci. Remote Sens.,* 2001, vol. 39 (4), 830-841